# EUROPEAN PATENT APPLICATION

(11) **EP 1 559 932 A1**
(43) Date of publication of application: **03.08.2005**
(21) Application number: 05100591.6
(22) Date of filing: 28.01.2005
(51) Int. Cl.: F16H 57/02

(54) **Gear housing vent**

(30) Priority: 30.01.2004 US 766917
(71) Applicant: DANA CORPORATION, Toledo, OH 43615 (US)
(72) Inventor: Ramajois, Raghu M., Fort Wayne, Indiana 46808 (US); Atkins, Mark R., Maumee, Ohio 43537 (US); Maloney, Thomas P., 7-2 Delta, Ohio 43515 (US); Hamm, Benjamin R., Whitehouse, OH 43571-9198 (US)
(74) Representative: Jorio, Paolo, Dr. Ing.

(57) **Abstract**

A vent assembly or breathing tube adapted to relieve pressure in an axle assembly or other gear housing. A vent tube (3) may be disposed within a casing (5) and terminates at an oblique or circular open end (7) in a skirt portion of the tube (3). At least one hole (15) may extend through the side of the casing (5) to allow pressurized gases within the housing to escape through the vent tube (3) via the oblique opening. The casing has a hole (13) disposed on a substantially closed bottom surface (11) to allow the return of any lubricant which might enter the casing (5) through the side hole (15). The side hole (15) may be provided in the skirt when no casing is used. The side hole (15) is preferably located on a side opposite the lubricant flow direction.

## Description

### BACKGROUND OF THE INVENTION

### 1. Field of the Invention

The present invention is directed to a vent and more particularly to a vent for a gear housing such as in a final reduction gear assembly.

### 2. Discussion of the Related Art

Gear housings such as final reduction gears in an automobile experience a problem in that the internal pressure of the casing is increased as a result of the temperature rise caused by the operation of mechanisms within the housing. A breather device is often employed to vent the pressurized gas within the housing while preventing the entry of foreign matter into the oil casing. In a final gear case, the oil within the case is stirred vigorously, particularly when the gears are rotating at high speeds, so that the rate of recirculation of the oil, as well as the splashing of the oil, is increased which raises the level of the oil often leading to leakage of the lubricant. Some prior art devices have attempted to incorporate deflectors adjacent conventional vents. However such devices are not sufficiently effective in preventing the leakage of oil through the vent in such instances of raised oil levels and other turbulent conditions.

### SUMMARY OF THE INVENTION

The present invention is directed to a vent assembly or breathing tube adapted to relieve pressure in an axle assembly or other gear housing. A vent tube may be disposed within a casing and terminates at an oblique or circular open end in a skirt portion of the tube. At least one hole may extend through the side of the casing to allow pressurized gases within the housing to escape through the vent tube via the oblique opening. The casing has a hole disposed on a substantially closed bottom surface to allow the return of any lubricant which might enter the casing through the side hole. The side hole may be provided in the skirt when no casing is used. The side hole is preferably located on a side opposite the lubricant flow direction.

### BRIEF DESCRIPTION OF THE DRAWINGS

Fig. 1 is a perspective view of a vent tube according to the present invention.
Fig. 2 is a side view of the vent of Fig. 1 according to the present invention.
Fig. 3 is a sectional view of the vent tube taken along line 3-3 of Fig. 2.
Fig. 4 is a side view of the vent of installed on an axle housing according to the present invention.
Fig. 5 is a top view of the vent and housing of Fig. 4.
Fig. 6 is a cutaway view of a portion of the axle housing of Figs. 4-5.
Fig. 7 is a side view of the vent of Fig. 1 according to an alternate embodiment of the present invention.
Fig. 8 is a sectional view of the vent tube taken along line 8-8 of Fig. 7.
Fig. 9 is a top view of an alternate vent design.
Fig. 10 is a sectional view of the vent shown in Fig 9 taken along section line X-X of Fig. 9.
Fig. 11 is a sectional view of the vent shown in Fig. 9 taken along section line XI-XI of Fig. 9.

### DETAILED DESCRIPTION A PREFERRED EMBODIMENT

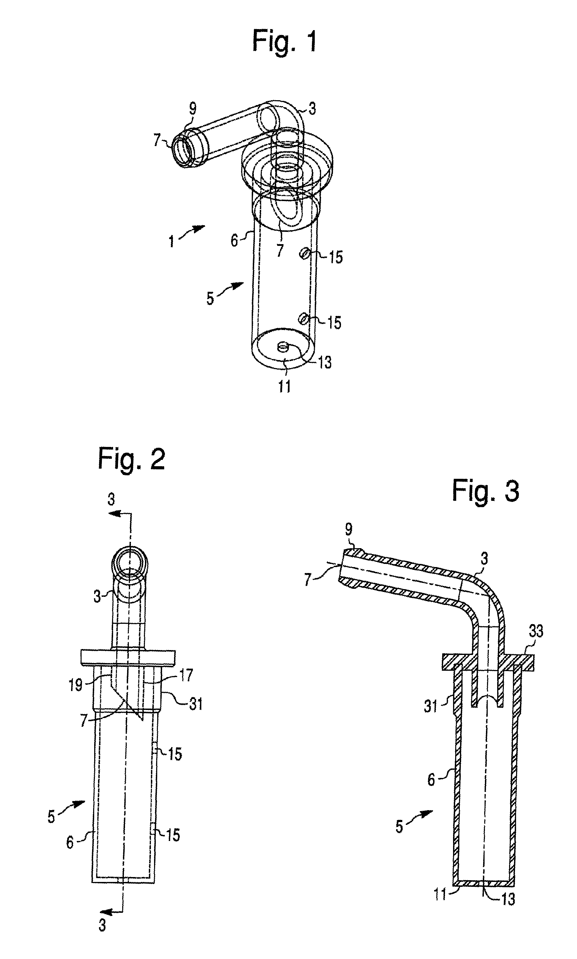

The present invention is directed to a vent or breathing tube for a gear housing such as an axle assembly. Referring to figure 1, the vent 1 includes a vent tube 3 extending through a casing 5 to form a skirt portion terminating at a non-truncated oblique first open end 7. The vent tube 3 extends upward out of the casing 5, turns orthogonally, and then extends to a second open end 7. A nipple or widened portion 9 (retention member) is formed on the second opened end 7 to facilitate retention of an extension member or breather hose. The casing 5 has a substantially closed bottom wall 11 with a drain hole 13 extending there through to facilitate the return or lubricant which may make its way into the casing 5. A pair of vent holes 15 is provided along through a side wall surface of the vent tube 5 along a longitudinal length thereof to permit pressurized gases within a gear housing to enter the casing 5 and exit through the vent tube 3.

Referring to Fig. 3, the non-truncated beveled open end of the vent tub 7 provides a long side 17 and a short side 19 of the vent tube 5 extending within the casing 5. The holes 15 through the sidewall of the casing 5 are preferably located proximate/adjacent the long side 17 of the vent tube 5. The oblique or beveled open end 7 increases the surface area of the open end 7 thus reducing the pressure of exiting gases. Furthermore, this overall arrangement produces a labyrinth effect thereby making it more difficult for any lubricant which may make its way into the casing 5 to pass through the vent tube 3. Any oil/lubricant which may enter through holes 15 would have to proceed to the opposite side of the casing 5 in order to escape through the vent tube 3 which is unlikely.

The casing 5 and vent tube 3 are preferably cylindrical members, the vent tube 3 being concentrically disposed within the casing 5 to define an annular cavity there between. The casing 5 includes a bolstered cylindrical portion 31. This cylindrical bolstered portion 31 is disposed within a correspondingly sized bored extending through the surface of the housing to position the casing 5 and vent tube 3 within the inner cavity of the gear housing. A top end wall 33 seals the casing 5 and is provided with a wider annular surface to abut an outer surface of the housing. In one embodiment the top end wall 33 is integrally formed with the vent tube 5. To assembly the vent assembly, the vent tube 5 and top end wall 33 are positioned atop the casing 5 as best can bee seen in Fig. 3. An annular recess may be formed in the bottom portion of the top end wall 33 in which an upper portion of the casing 5 may be disposed. The top end wall 33 and casing 5 may be welded together or otherwise adhered to one another to form a hermitic seal there between.

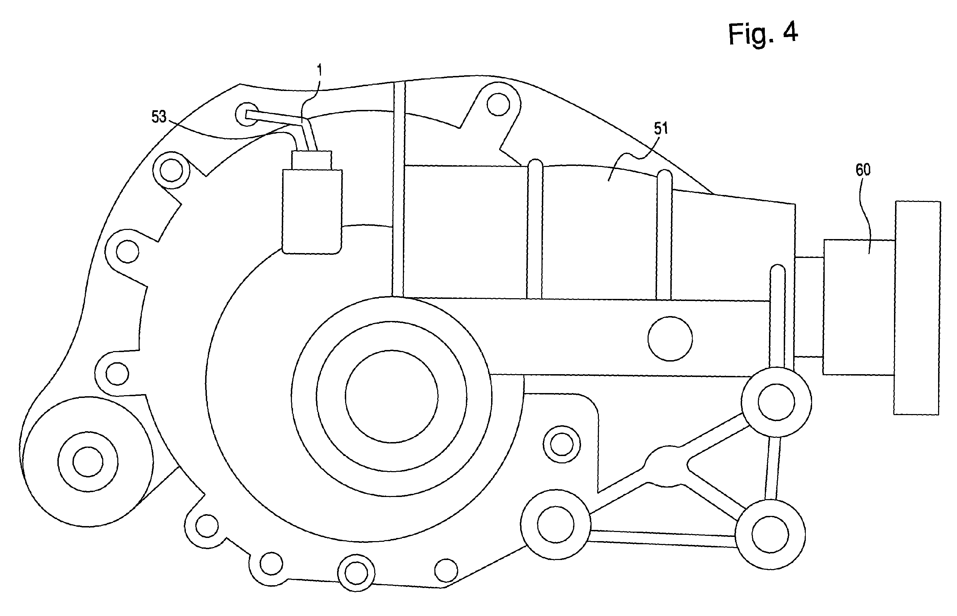

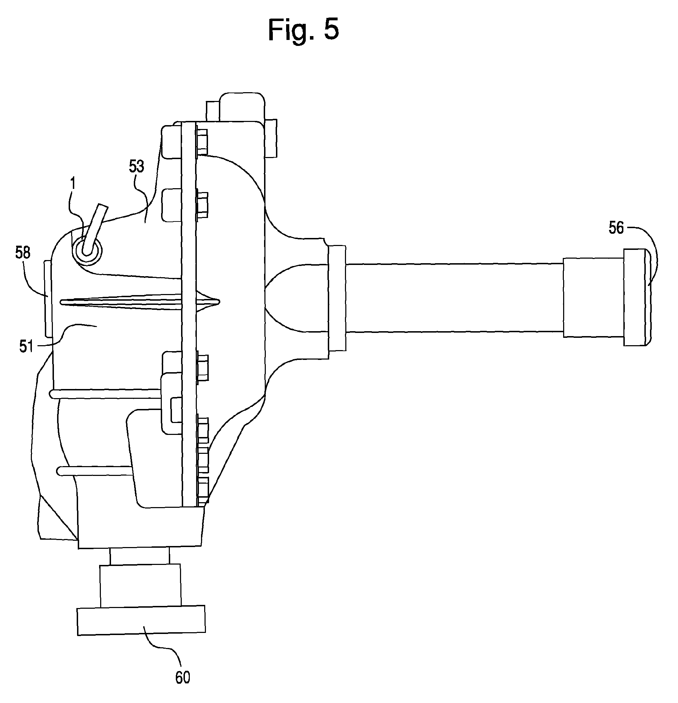

Figures 4-5 depict the vent assembly 1 connected to an axle assembly 51 containing a differential gear assembly. The gear assembly contains conventional gearing to facilitate differential speed rotation between a pair of output shafts 56, 58 as driven by an input shaft 60. The details of the internal gearing will not be further explained in detail as such assemblies are well understood to those of ordinary skill in the art. The vent assembly 1 is simply inserted through a bore extending through a flat shoulder portion 53 formed in the axle housing 51 slightly axially offset from the input shaft as shown in figure 5. The top end wall 33 may then be simply secured to the flat shoulder portion 53 is a sealed fashion such as by welding or other means known in the art. So long as the vent assembly 1 is positively retained in a sealed fashion, any conventional means may be employed to sealing connect the cent assembly 1 with the housing 51.

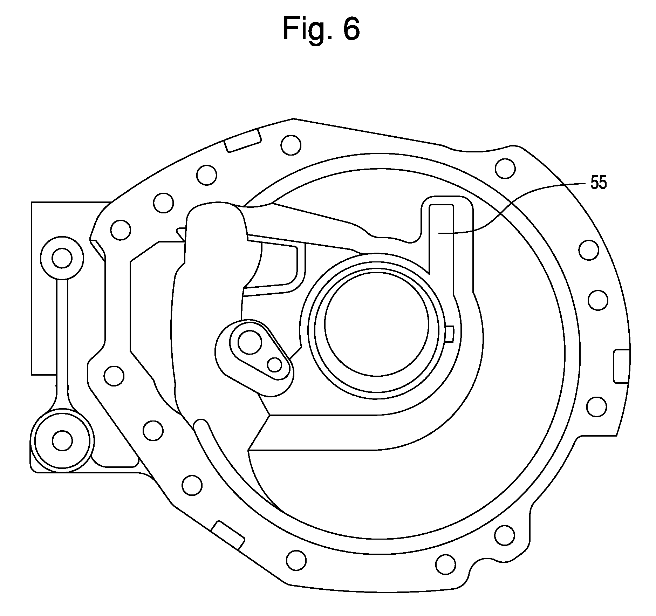

The shoulder portion 51 may be formed as a raised surface to define an interior cavity 55 within the housing 51 to accommodate a lower portion of the casing 5 and vent tube opening 7 as best shown in Figure 6. However, it is noted that the vent tube may be sized appropriately for retrofit installation and may be simply inserted through a wall of a conventional gear housing where sufficient space will accommodate the case 5 and vent tube 3. The top end wall 33 may be contoured to mate a multidimensional exterior surface of the housing 51. Such assembly techniques are believed to be well within the skill of one or ordinary skill in the art a no further elaboration is necessary.

During operation of the axle assembly, the rotation of the gearing will cause violent displacement of lubricating oil there within. As the lubricant heats, the pressure within the housing 51 will increase. Such pressure increase is undesirably as such can cause oil leakage through seals as well as other problems understood in the art. The vent tube assembly 1 provides a necessary release of pressurizes gases while retaining the oil lubricant within the housing 51.

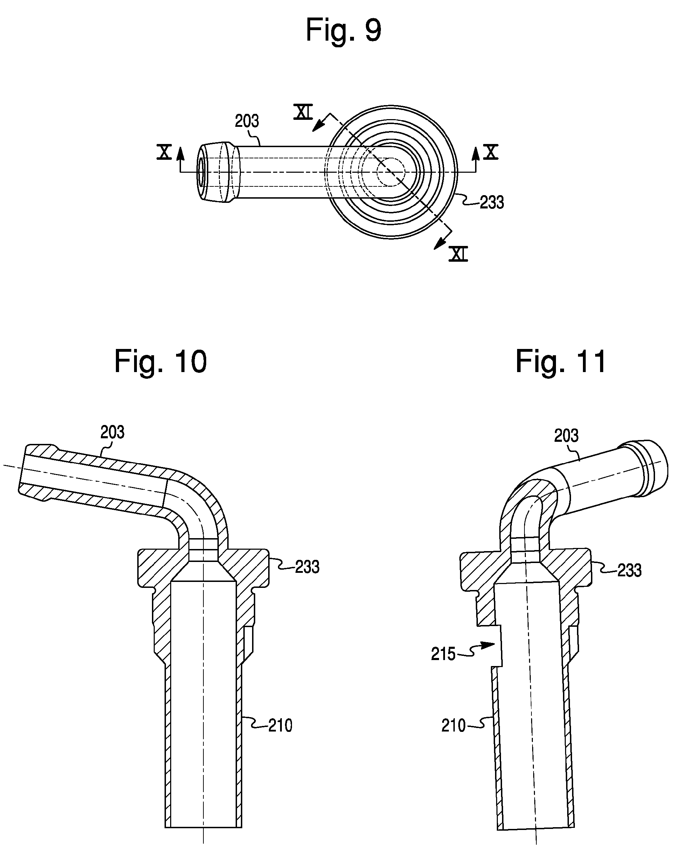

Figure 9 shows a top view of an alternate vent design according to this invention. Figures 10 and 11 show sectional view of the vent shown in Figure 9. The vent is adapted to be secured to and extend within the housing described above, and the vent comprises a top portion 233 secured adjacent the housing, a skirt 210 extending into the housing and having a continuous side wall extending circumferentially at least 180 degrees; and a vent opening 215 passing through the skirt 210, where the vent opening 215 is adjacent the top portion 233. The neck portion 203 is integrally formed with the top portion 233 and skirt 210, and the neck portion 203 turns 90 degrees as shown in Figures 9-11.

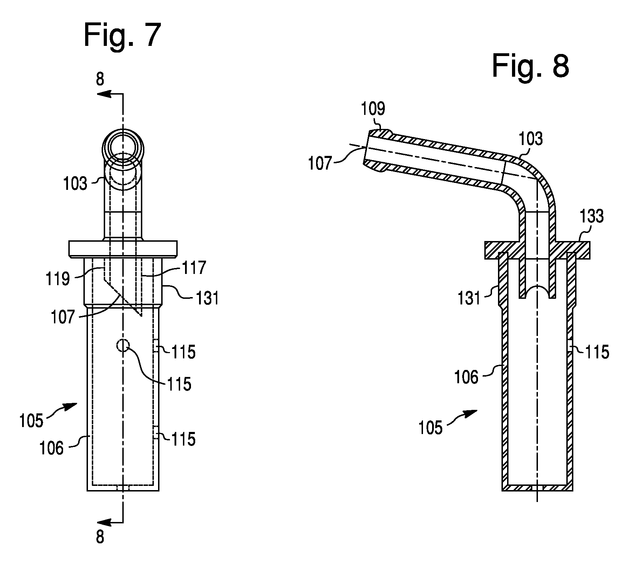

While the foregoing invention has been shown and described with reference to a preferred embodiment, it will be understood by those possessing skill in the art that various changes and modifications may be made without departing from the spirit and scope of the invention. For example, the vent tub has been shown secured to a clamshell axle assembly. However, it is to be understood that the vent arrangement of the present invention may be used with any gear housing as well as other types of axle assemblies.
For example, as shown in figures 7-8, the bottom of the casing 115 may remain open at a lower terminal end rather than the small hole 13. An additional side hole 115 may also be provided at the height of the upper hole 15 of the embodiment of figures 1-3 and offset 90° therefrom. These and other variations are believed to be within the scope of the present invention as detailed in claims below.

## Claims

1. A vent assembly for a gear housing filled with a lubricating fluid and accommodating a gear mechanism, said vent assembly comprising:
a hollow casing including a continuous side wall having at least one hole there through, the hollow casing having an opening formed in a lower portion thereof; and
a vent tube extending within said hollow casing so as to form a cavity between an inner peripheral surface of said casing and an outer peripheral surface of said vent tube, said vent tube having a first open end disposed within said hollow casing and a second end extending outside said casing in communication with an external environment.

2. The vent assembly according to claim 1, wherein said vent tube and said hollow casing are substantially cylindrical and said cavity is between said casing and tube is substantially annular.

3. The vent assembly according to claim 1, wherein said first open end of said vent tube is beveled with respect to a length thereof and defining a long side and a short side along a longitudinal length of said vent, said at least one hole through said sidewall of said casing being located on a longitudinal first side portion of said casing adjacent said long side of said vent tube.

4. The vent according to claim 3, wherein said at least one hole through said sidewall includes two holes longitudinally spaced apart and longitudinally coextensive along said first side portion of said casing.

5. The vent assembly according to claim 1, wherein said vent rube is non-truncated such that said first open end is obliquely formed and thereby defines a long side and a short side of said vent tube within said casing, said at least one hole through said sidewall of said casing being located on a longitudinal first side portion of said casing adjacent said long side of said vent tube.

6. The vent assembly according to claim 1, wherein said hollow casing includes a bottom wall substantially closing said hollow casing, said opening defined by a hole extending through said bottom wall to facilitate return of entrained lubricant to said gear housing.

7. A gear housing for containing a gear assembly and lubricating fluid, said gear housing having a vent tube secured to and extending within the housing, said vent tube comprising:
a top portion secured adjacent the housing;
a skirt extending into the housing and having a continuous side wall extending circumferentially at least 180 degrees; and
a vent opening passing through said skirt, said vent opening being adjacent the top portion and opposite the side wall.

8. The gear housing according to claim 7, wherein said skirt is formed as an annular body with a circular opening opposite said top portion.

9. The gear housing according to claim 7, wherein said top portion is integrally formed with an external neck portion projecting from said top end wall portion.

10. The gear housing according to claim 9, wherein said top end wall portion, said skirt and said external neck portion are integrally formed as a homogenous body.

11. A gear housing for containing a gear assembly and lubricating fluid, said gear housing having a vent tube secured to and extending within the housing, said vent tube comprising:
a top portion secured adjacent the housing;
a skirt extending into the housing, said skirt being obliquely formed and defines a long side and a short side of said vent tube within said casing;
wherein said long side of said vent tube is upstream of lubricant flow so that an oblique opening formed by said skirt faces downstream of said lubricant flow to deflect lubricant away from said oblique opening.

12. The gear housing according to claim 11, wherein said top end wall portion is integrally formed with an external neck portion projecting from said top end wall portion.

13. The gear housing according to claim 12, wherein said top end wall portion, said skirt and said external neck portion are integrally formed as a homogenous body.
